# FASCICULE DE BREVET EUROPEEN

(11) **EP 2 979 396 B1**
(45) Date de publication et mention de la délivrance du brevet: **02.06.2021**
(21) Numéro de dépôt: 14718660.5
(22) Date de dépôt: 21.03.2014
(51) Int. Cl.: H04W 4/12, H04L 12/58, H04L 12/18

(54) **PROCÉDÉ D'ÉCHANGE DE MESSAGES MULTIMÉDIAS**
VERFAHREN ZUM AUSTAUSCH VON MULTIMEDIANACHRICHTEN
METHOD FOR EXCHANGING MULTIMEDIA MESSAGES

(30) Priorité: 25.03.2013 FR 1352681
(43) Date de publication de la demande: 03.02.2016
(73) Titulaire: ORANGE, 75015 Paris (FR)
(72) Inventeur: LE HUEROU, Emmanuel, F-22700 Saint Quay Perros (FR); BEAUFILS, Eric, F-22450 Langoat (FR); MERCIER, Violaine, F-22560 Pleumeur Bodou (FR)
(74) Mandataire: Regimbeau
(86) Numéro de dépôt international: PCT/FR2014/050667
(87) Numéro de publication internationale: WO 2014/154979

(56) Documents cités:
- US-A1- 2002 160 836
- US-A1- 2010 321 534
- US-A1- 2011 041 063
- US-A1- 2011 276 901

## Description

### DOMAINE TECHNIQUE GENERAL

La présente invention concerne le domaine de la messagerie pour la téléphonie mobile.

Plus précisément, elle concerne un procédé d'échange entre terminaux de messages multimédias.

### ETAT DE L'ART

Le MMS (« Multimedia Messaging Service », service de messagerie multimédia), est un système permettant l'échange de messages multimédias pour la téléphonie mobile. Par extension, le sigle MMS désigne communément un message multimédia transmis via ce service.

Il étend les capacités des SMS, qui sont limités à 160 caractères, et permet notamment de transmettre des photos, des enregistrements audio ainsi que de la vidéo.

La force du MMS réside dans sa capacité à être utilisé de façon indépendante de la technologie du réseau (aussi bien 2G que 3G) et des modèles de terminaux mobiles. Il est en effet tout à fait possible d'envoyer des MMS vers n'importe terminal, y compris des terminaux antérieurs à l'apparition du service : si le terminal du destinataire n'est pas compatible MMS, le message est en général consultable sur le web, l'adresse URL étant indiquée dans un SMS destiné à être lu par le destinataire.

Des systèmes similaires sont décrits, par exemple, dans les documents de l'art antérieur US 2002/160836 A1 (WATANABE YASUHIRO [JP] ET AL) 31 octobre 2002 (2002-10-31), US 2011/276901 A1 (ZAMBETTI NICHOLAS [US] ET AL) 10 novembre 2011 (2011-11-10), US 2010/321534 A1 (KIM JEONG YUN [KR]) 23 décembre 2010 (2010-12-23).

On constate toutefois que même si des smartphones très évolués sont apparus depuis, le service n'a pas évolué depuis une dizaine d'années.

Il serait ainsi souhaitable de permettre un échange de messages multimédias plus efficace, plus rapide, qui tire profit des capacités accrues des smartphones modernes en termes d'ergonomie, et ce sans remettre en cause les forces du SMS/MMS en termes d'interopérabilité et de robustesse (qualité de service).

### PRESENTATION DE L'INVENTION

La présente invention se rapporte ainsi selon un premier aspect à un procédé d'échange de messages multimédias entre un premier terminal mobile et un deuxième terminal mobile connectés à un réseau de communication, le procédé comprenant la mise en œuvre, par un module de traitement de données du premier terminal, d'étapes de :
(a) réception depuis le réseau d'un premier message multimédia émis par le second terminal, le premier message multimédia comprenant au moins un média ;
(b) restitution et modification dudit média dans une interface utilisateur en fonction d'actions d'un utilisateur, l'interface utilisateur restituant le premier message ;
(c) envoi à destination du deuxième terminal d'un deuxième message multimédia comprenant ledit média modifié.

Ce procédé propose de modifier un média (en particulier une image) reçu par MMS avant de le renvoyer à l'expéditeur. Cette innovation permet de dynamiser l'usage du MMS en permettant un échange interactif de contenus multimédias qui soit rapide, facile, et ludique pour les utilisateurs.

De plus, les forces du MMS sont conservées puisqu'un terminal qui ne permet pas la mise en œuvre du présent procédé recevra un MMS ainsi généré de la même façon que tout autre.

Selon d'autres caractéristiques avantageuses et non limitatives :
- ledit au moins un média est une image (les images sont les médias les plus communément envoyés via MMS, et leur traitement dans le procédé via par exemple un écran tactile est particulièrement aisé) ;
- ladite interface utilisateur permet l'affichage sous la forme d'un fil de discussion des images comprises dans les messages multimédias échangés entre les premier et second terminaux (cette présentation procure la même ergonomie que celle obtenue sur les interfaces évoluées de messagerie SMS) ;
- l'interface utilisateur comprend des outils d'édition graphique pour la mise en œuvre de l'étape (b), l'image étant affichée sur l'interface utilisateur en temps réel lors de sa modification (le présent procédé est particulièrement adapté aux images, l'intégration d'outils d'édition graphique permet en effet une modification particulièrement intuitive et efficace de ce type de médias) ;
- ledit premier terminal comprend un écran tactile pour la mise en œuvre de ladite interface utilisateur du premier terminal, lesdites actions de l'utilisateur étant des actions tactiles (la technologie tactile est particulièrement adaptée au procédé et augmente l'interactivité et la simplicité d'utilisation recherchées) :
- le message multimédia est de type Multimedia Message Service (MMS) (il s'agit comme expliqué du standard massivement utilisé de nos jours) ;
- la transmission des messages multimédias dans le réseau peut être mise en œuvre conformément aux spécifications *Rich Communication Services* (RCS) (les spécifications RCS définissent de nouveaux standards qui augmentent sensiblement l'expérience de l'utilisateur en termes de confort, de rapidité, etc.).

Selon un deuxième aspect, l'invention concerne un terminal mobile connecté à un deuxième terminal mobile via un réseau de communication, le terminal comprenant un module de traitement de données, caractérisé en ce que le module de traitement de données est configuré pour :
- recevoir depuis le réseau un premier message multimédia émis par le second terminal, le premier message multimédia comprenant au moins un média ;
- restituer et modifier ledit média dans une interface utilisateur en fonction d'actions d'un utilisateur, l'interface utilisateur restituant le premier message ;
- envoyer à destination du deuxième terminal un deuxième message multimédia comprenant ledit média modifié.

Ce terminal vise à assurer de façon transparente pour l'utilisateur la mise en œuvre du procédé selon l'invention, par exemple au travers d'une application installée. Cette application peut remplacer une application SMS/MMS existante puisqu'elle offre les mêmes fonctions, mais de façon plus efficace et plus poussée.

Grâce à l'interface utilisateur du terminal, les actions de l'utilisateur sont intuitivement reportées sur le média pour le modifier et permettre l'échange interactif de MMS.

Selon respectivement un troisième et un quatrième aspect, l'invention concerne un produit programme d'ordinateur comprenant des instructions de code pour l'exécution d'un procédé, selon le premier aspect de l'invention, d'échange de messages multimédias entre un premier terminal mobile et un deuxième terminal mobile connectés à un réseau de communication ; et un moyen de stockage lisible par un équipement informatique, sur lequel un tel produit programme d'ordinateur selon l'invention est stocké.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
- la figure 1 est un schéma d'une architecture de réseau pour la mise en œuvre d'un mode de réalisation préféré du procédé selon l'invention ;
- les figures 2a-2c sont trois captures d'écran d'un terminal mobile illustrant la mise en œuvre d'un mode de réalisation du procédé selon l'invention.

### DESCRIPTION DETAILLEE

### Principe

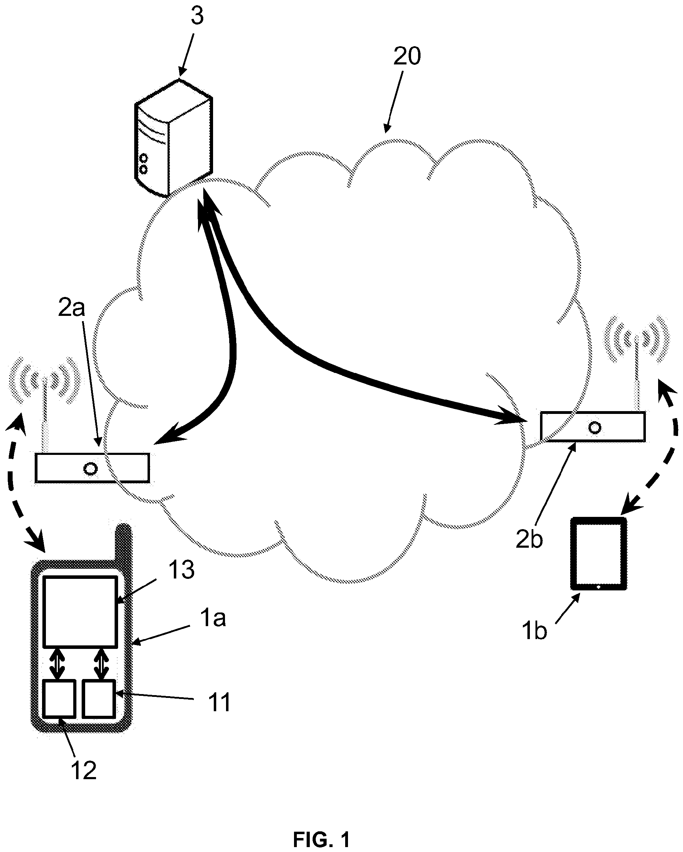

En connexion avec la **figure 1****,** le procédé selon l'invention est un procédé pour l'échange de messages multimédias entre un premier terminal mobile la et un deuxième terminal mobile 1b connectés via un réseau de communication 20, en particulier un réseau de téléphonie mobile et/ou le réseau Internet.

Chaque terminal la, 1b peut être tout équipement nomade pouvant se connecter au réseau 20 et supportant l'échange de messages multimédias, en particulier des smartphones, des tablettes tactiles, etc. Dans l'exemple représenté par la figure 1, le premier terminal la est un smartphone connecté au réseau 20 via une antenne 2a, et le deuxième terminal 1b est une tablette tactile connectée au réseau 20 via une borne Wi-Fi 2b.

Les terminaux la, 1b comprennent chacun un module de traitement de données 11 (un processeur), et avantageusement un module de stockage de données 12 (une mémoire flash).

On comprendra qu'il peut y avoir plusieurs deuxièmes terminaux 1b si l'utilisateur du terminal la souhaite envoyer un message multimédia à plusieurs destinataires à la fois et faire des conversations à plus de deux participants.

Par message multimédia, on entend tout message "de type MMS", c'est-à-dire un message conforme à un système d'émission et de réception de messages multimédias pour la téléphonie mobile (3G, 4G, ou LTE - *Long Term Evolution*), et capable de transmettre au moins un média, c'est-à-dire tout contenu graphique (image, photo, gif animé, vidéo, etc.) ou tout contenu sonore (un fichier audio), dans un réseau. On comprendra donc que l'invention n'est pas limitée au MMS tel que connu aujourd'hui et qu'elle pourra s'appliquer à des évolutions ou remplacements de ce standard.

Il est à noter que le message MMS peut comprendre plus d'un média, et peut en combiner plusieurs types (par exemple une image et un son).

Comme représenté, toujours sur la figure 1, un serveur 3 pour le stockage et l'acheminement des messages multimédias est également connecté au réseau 20.

Ce serveur 3, qui est en particulier un serveur MMSC (« Multimedia Messaging Service Center », Centre MMS), reçoit tout message MMS envoyé d'un terminal connecté au réseau 20, détermine ensuite si le destinataire est équipé d'un terminal permettant de recevoir des MMS (et si le terminal est actuellement connecté), et le cas échéant achemine le message. Sinon il est temporairement stocké.

Alternativement, le serveur 3 est avantageusement un serveur « enabler » RCS (« Rich Communication Services », services de communication riche), en d'autres termes un serveur mettant en œuvre le nouveau standard conforme aux spécifications RCS pour l'échange de SMS/MMS en utilisant du transport de données sur IP (« Internet Protocole »), et non les circuits classiques.

On comprendra que le procédé selon l'invention n'est limité à aucune méthode particulière de transport des messages multimédias au sein du réseau 20, et pourra notamment être adapté à des normes futures.

Ce procédé se distingue de l'existant en ce qu'il comprend la mise en œuvre par le module de traitement de données 11 du premier terminal la d'étapes de :
(a) réception depuis le réseau 20 d'un premier message multimédia émis par le second terminal 1b, le premier message multimédia comprenant au moins un média ;
(b) restitution et modification dudit média dans une interface utilisateur I en fonction d'actions d'un utilisateur ;
(c) envoi à destination du deuxième terminal 1b d'un deuxième message multimédia comprenant ledit média modifié.

En d'autres termes, le procédé objet de l'invention propose un échange de MMS entre les premier et deuxième terminaux la, 1b dans lequel l'utilisateur peut modifier un média reçu, et le retransmettre.

Dans la suite de la présente description, on prendra l'exemple selon lequel le média est une image (la restitution est alors un affichage), mais l'homme du métier saura transposer l'invention décrite à tout autre média ou combinaison de médias.

En effet, de façon classique, lorsqu'un utilisateur a reçu une image par MMS, il peut continuer la conversation soit en renvoyant une autre image, soit en modifiant celle reçue via une application spécifique d'édition d'image du terminal puis en la renvoyant.

La deuxième possibilité est longue et fastidieuse, et n'est donc pas utilisée : une fois l'image reçue il faudrait l'enregistrer sur le module de stockage de données 12 du terminal la, lancer l'application d'édition et mettre en œuvre la modification, enregistrer à nouveau l'image modifiée, et enfin charger cette dernière depuis l'application dédiée à l'envoi de MMS.

Le présent procédé propose, lorsque l'utilisateur reçoit l'image du message MMS, de pouvoir la modifier en même temps qu'il la visionne, pour un échange intuitif et rapide.

Il est à noter que si le deuxième terminal 1b dispose d'un module de traitement de données 11 configuré de façon similaire, il peut à son tour remodifier l'image et la renvoyer afin de continuer facilement et de manière ludique l'échange.

Dans le cas où il ne dispose que d'une application conventionnelle de gestion des MMS, le destinataire reçoit le message multimédia comprenant l'image modifiée comme n'importe quel autre message MMS, d'où une interopérabilité totale.

### Interface utilisateur

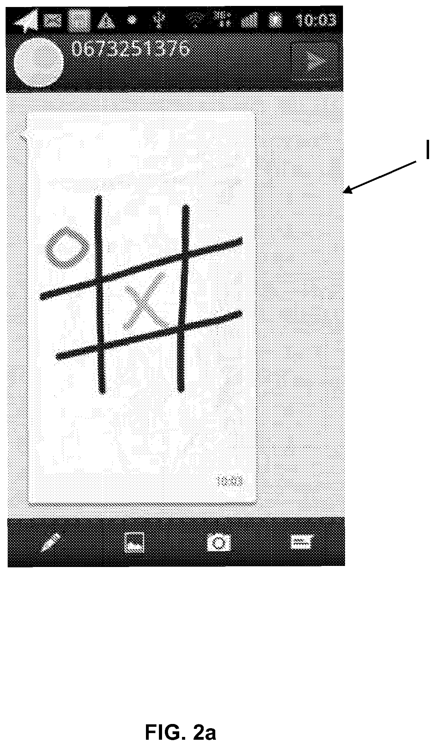

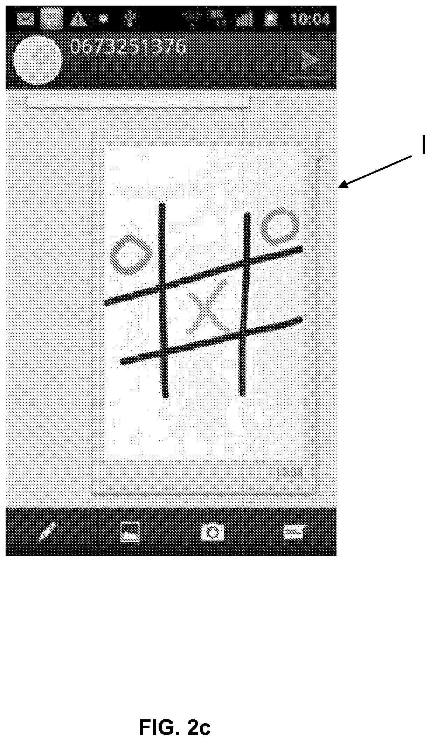

En référence aux **figures 2a-2c****,** le procédé selon l'invention met en œuvre une interface utilisateur I adaptée, l'interface étant affichée sur un écran 13 du terminal mobile la.

De façon préférée, l'écran 13 est un écran tactile pour la mise en œuvre de l'interface utilisateur I du terminal. Les actions de l'utilisateur peuvent alors être des actions tactiles directement sur l'affichage, ce qui facilite encore la mise en œuvre du procédé, comme on le verra plus loin.

Les figures 2a-2c illustrent l'utilisation du procédé objet de l'invention pour un échange de messages MMS permettant de jouer à un jeu de morpion.

Comme l'on peut voir sur la figure 2a, l'interface I permet tout d'abord l'affichage de l'image du MMS telle que reçue. Dans l'exemple illustré, l'image représente le plateau du jeu de morpion à un stade donné de la partie.

Il est à noter que l'interface I peut permettre l'affichage sous la forme d'un fil de discussion (c'est-à-dire sous forme d'une liste ordonnée chronologique) des dessins (images) compris dans les messages multimédias échangés entre les premier et second terminaux la, 1b.

Si plusieurs contenus étaient compris dans un message échangé, l'interface I peut proposer leur restitution de différentes façons (lecture d'un contenu audio en appuyant sur un bouton, affichage dans le fil de discussion de toutes les images/films, etc.).

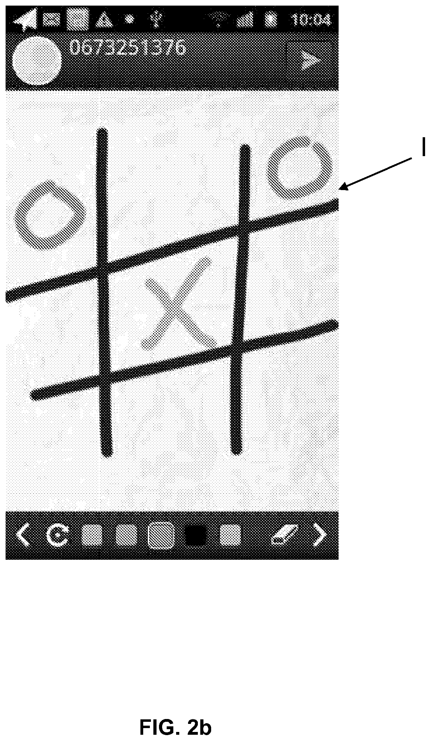

Outre les boutons habituels d'une interface de gestion de messages MMS (« nouveau message », « sélection d'une image », « prise d'une photo », etc.) l'interface I propose d'accéder à un mode « dessin », visible sur la figure 2b, en appuyant sur un bouton ou directement sur l'image reçue dans le cas d'un écran tactile (13).

Ce mode dessin permet la modification de l'image dans une interface utilisateur I en fonction d'actions d'un utilisateur. Par « action de l'utilisateur », on entend toute commande sur des moyens de saisie du terminal la (par exemple un clavier, et avantageusement l'écran 13 lui-même s'il est tactile) visant volontairement à modifier l'image, et non de simples traitements de l'image que l'utilisateur déclenche indirectement. A titre d'exemple, les modifications peuvent comprendre le tracé d'un dessin sur l'image, la coloration d'une partie de l'image, l'ajout de texte, de motifs, de formes, l'effacement d'une partie de l'image, etc. On comprendra que chaque action exécutée par l'utilisateur est consciemment destinée à obtenir une modification souhaitée par celui-ci.

Ainsi, le mode dessin correspond avantageusement à un mode dans lequel l'interface utilisateur I comprend des outils d'édition graphique pour la mise en œuvre de l'étape (b) précitée de modification de l'image, l'image étant affichée sur l'interface utilisateur I en temps réel lors de sa modification.

Les outils d'édition graphique peuvent être de toute sorte, on peut voir à titre d'exemple sur la figure 2b, sur la partie inférieure de l'écran, un outil « gomme » (sous forme de bouton d'action) qui permet lorsqu'il est actif d'effacer une partie de l'image en passant un doigt sur cette partie, et des outils « couleur » (également sous forme de boutons d'actions) qui permettent à l'utilisateur de sélectionner digitalement une couleur pour l'appliquer sur l'image à la manière d'un pinceau.

Sur la figure 2b, un bouton d'action (au milieu du bandeau inférieur de l'interface) est actif ce qui permet à l'utilisateur d'utiliser l'outil « couleur rouge », par exemple, pour dessiner un cercle dans la case en haut à droite. Dans le cas d'un écran tactile 13, le doigt agit tel un crayon pour une modification rapide et précise de l'image.

L'affichage temps réel permet à l'utilisateur de suivre l'évolution de l'image selon ses souhaits, et d'y apporter facilement des corrections.

Pour créer un contenu sonore, un bouton d'action spécifique de l'interface peut permettre à l'utilisateur de lancer un enregistrement audio, via des moyens adaptés du terminal mobile la tels qu'un microphone, lequel enregistrement, s'il est validé par l'utilisateur, peut être alors concaténé au contenu sonore reçu, de façon à obtenir le contenu modifié. Le même principe peut s'appliquer pour des vidéos. Il est à noter que l'interface I peut par exemple proposer plusieurs écrans (avec des outils spécifiques), chaque écran étant adapté à un type de média.

Une fois les modifications souhaitées par l'utilisateur accomplies, un autre bouton de l'interface permet à ce dernier de déclencher l'envoi du message MMS comprenant le dessin (ou autre média) modifié (le "deuxième message multimédia" défini plus haut) à destination du deuxième terminal 1b dont l'utilisateur, à son tour, pourra modifier le dessin reçu et le renvoyer dans un troisième message multimédia, et ainsi de suite.

### Terminal

Comme exposé plus haut, selon un deuxième aspect, l'invention concerne un terminal mobile la pour la mise en œuvre du procédé d'échange de messages multimédias selon l'invention.

Ce terminal mobile la est donc, comme expliqué plus haut en relation avec la figure 1, connecté à un deuxième terminal mobile 1b via le réseau de communication 20, le terminal la comprenant un module de traitement de données 11 tel qu'un processeur, et un écran 13 avantageusement tactile.

Le module de traitement de données 11 est donc configuré pour :
- recevoir depuis le réseau 20 un premier message multimédia émis par le second terminal 1b, le premier message multimédia comprenant (au moins) un média ;
- restituer et modifier le média dans une interface utilisateur I en fonction d'actions d'un utilisateur (l'interface I est affichée sur l'écran 13, et dans le cas d'un média image si l'écran est tactile les actions de l'utilisateur sont directement mises en œuvre sur l'image telle qu'affichée) ;
- envoyer à destination du deuxième terminal 1b un deuxième message multimédia comprenant le média modifié.

On notera que le module de traitement 11 peut être configuré selon l'invention directement lors de la conception du terminal la (configuration native), ou configuré ultérieurement, par exemple par l'installation dans le terminal d'une application spécifique selon l'invention, cette application spécifique remplaçant éventuellement une application SMS/MMS native.

Avantageusement, le deuxième terminal 1b comporte un module de traitement de données 11 configuré similairement, de façon à permettre alternativement la mise en œuvre du procédé selon l'invention sur chacun des terminaux la et 1b pour un échange continu de MMS qui soit efficace et intuitif.

### Produit programme d'ordinateur

Comme exposé plus haut, l'invention concerne également un produit programme d'ordinateur comprenant des instructions de code pour l'exécution, par un module de traitement de données d'un terminal de communication (le module de traitement de données 11 d'un premier terminal mobile la, ainsi que, le cas échéant, celui d'un deuxième terminal 1b), d'un procédé selon l'invention d'échange de messages multimédias entre un premier terminal mobile (la) et un deuxième terminal mobile (1b) connectés à un réseau de communication (20). L'invention concerne aussi des moyens de stockage lisibles par un équipement informatique (par exemple une mémoire 12 d'un des terminaux la, 1b), sur lequel ce produit programme d'ordinateur est stocké.

## Revendications

1. Procédé d'échange de messages multimédias conformes au format Multimedia Message Service (MMS), entre un premier terminal mobile (Ia) et un deuxième terminal mobile (Ib) connectés à un réseau de communication (20), le procédé comprenant la mise en œuvre par un module de traitement de données (11) du premier terminal (Ia) d'étapes de :
(a) réception depuis le réseau (20) d'un premier message multimédia émis par le second terminal (Ib), le premier message multimédia comprenant au moins un média ;
(b) restitution et modification dudit média dans une interface utilisateur (I), en fonction d'actions d'un utilisateur, l'interface utilisateur (I) restituant le premier message ;
(c) envoi à destination du deuxième terminal (Ib) d'un deuxième message multimédia comprenant ledit média modifié.

2. Procédé selon la revendication 1, dans lequel le dit au moins un média est une image.

3. Procédé selon la revendication 2, dans lequel ladite interface utilisateur (I) permet l'affichage sous la forme d'un fil de discussion des images comprises dans les messages multimédias échangés entre les premier et second terminaux (Ia, Ib).

4. Procédé selon l'une des revendications 2 et 3, dans lequel l'interface utilisateur (I) comprend des outils d'édition graphique pour la mise en œuvre de l'étape (b), l'image étant affichée sur l'interface utilisateur (I) en temps réel lors de sa modification.

5. Procédé selon l'une des revendications précédentes, dans lequel ledit premier terminal (la) comprend un écran tactile (13) pour la mise en œuvre de ladite interface utilisateur (I) du premier terminal (la), lesdites actions de l'utilisateur étant des actions tactiles.

6. Procédé selon l'une des revendications précédentes, dans lequel la transmission des messages multimédias dans le réseau (20) est mise en œuvre conformément aux spécifications Rich Communication Services (RCS)

7. Terminal mobile (la) connecté à un deuxième terminal mobile (Ib) via un réseau de communication (20), le terminal (la) comprenant un module de traitement de données (11), **caractérisé en ce que** le module de traitement de données (11) est configuré pour :
recevoir depuis le réseau (20) un premier message multimédia conformes au format MMS émis par le second terminal (Ib), le premier message multimédia comprenant au moins un média ;
restituer et modifier ledit média dans une interface utilisateur (I)en fonction d'actions d'un utilisateur, l'interface utilisateur (I) restituant le premier message ;
envoyer à destination du deuxième terminal (Ib) un deuxième message multimédia conformes au format MMS comprenant ledit média modifié.

8. Produit programme d'ordinateur comprenant des instructions de code pour l'exécution d'un procédé selon l'une des revendications 1 à 6 d'échange de messages multimédias entre un premier terminal mobile (la) et un deuxième terminal mobile (Ib) connectés à un réseau de communication (20).

9. Moyen de stockage lisible par un équipement informatique, sur lequel est stocké un produit programme d'ordinateur comprenant des instructions de code pour l'exécution d'un procédé selon l'une des revendications 1 à 6 d'échange de messages multimédias entre un premier terminal mobile (la) et un deuxième terminal mobile (lb) connectés à un réseau de communication (20).

## Patentansprüche

1. Verfahren zum Austausch von Multimedianachrichten, die dem Format Multimedia Message Service (MMS) entsprechen, zwischen einem ersten mobilen Endgerät (Ia) und einem zweiten mobilen Endgerät (Ib), die mit einem Kommunikationsnetz (20) verbunden sind, wobei das Verfahren die Umsetzung der folgenden Schritte durch ein Datenverarbeitungsmodul (11) des ersten Endgeräts (Ia) umfasst:
(a) Empfang einer ersten Multimedianachricht, die vom zweiten Endgerät (Ib) gesendet wurde, vom Netz (20) wobei die erste Multimedianachricht mindestens ein Medium umfasst;
(b) Wiedergabe und Veränderung des Mediums in einer Benutzerschnittstelle (I) in Abhängigkeit von Aktionen eines Benutzers, wobei die Benutzerschnittstelle (I) die erste Nachricht wiedergibt;
(c) Sendung einer zweiten Multimedianachricht, die das veränderte Medium umfasst, an das zweite mobile Endgerät (Ib).

2. Verfahren nach Anspruch 1, wobei das mindestens eine Medium ein Bild ist.

3. Verfahren nach Anspruch 2, wobei die Benutzerschnittstelle (I) die Anzeige der Bilder, die in den zwischen dem ersten und dem zweiten Endgerät (Ia, Ib) ausgetauschten Multimedianachrichten enthalten sind, in Form eines Diskussionsfadens ermöglicht.

4. Verfahren nach einem der Ansprüche 2 und 3, wobei die Benutzerschnittstelle (I) grafische Bearbeitungswerkzeuge für die Durchführung des Schritts (b) umfasst, wobei das Bild bei seiner Veränderung auf der Benutzerschnittstelle (I) in Echtzeit angezeigt wird.

5. Verfahren nach einem der vorhergehenden Ansprüche, wobei das erste Endgerät (Ia) einen Tastbildschirm (13) für die Umsetzung der Benutzerschnittstelle (I) des ersten Endgeräts (Ia) umfasst, wobei die Aktionen des Benutzers taktile Aktionen sind.

6. Verfahren nach einem der vorhergehenden Ansprüche, wobei die Übertragung von Multimedianachrichten im Netz (20) entsprechend den Spezifikationen Rich Communication Services (RCS) umgesetzt wird.

7. Mobiles Endgerät (Ia), das über ein Kommunikationsnetz (20) mit einem zweiten mobilen Endgerät (Ib) verbunden ist, wobei das Endgerät (Ia) ein Datenverarbeitungsmodul (11) umfasst, das **dadurch gekennzeichnet ist, dass** das Datenverarbeitungsmodul (11) zu Folgendem konfiguriert ist:
Empfangen, über das Netz (20), einer ersten Multimedianachricht, die dem Format MMS entspricht und vom zweiten Endgerät (Ib) gesendet wurde, wobei die erste Multimedianachricht mindestens ein Medium umfasst;
Wiedergeben und Verändern des Mediums in einer Benutzerschnittstelle (I) in Abhängigkeit von Aktionen eines Benutzers, wobei die Benutzerschnittstelle (I) die erste Nachricht wiedergibt;
Senden einer zweiten Multimedianachricht, die dem Format MMS entspricht und das veränderte Medium umfasst, an das zweite mobile Endgerät (Ib).

8. Computerprogrammprodukt, umfassend Codeanweisungen zur Ausführung eines Verfahrens nach einem der Ansprüche 1 bis 6 zum Austausch von Multimedianachrichten zwischen einem ersten mobilen Endgerät (Ia) und einem zweiten mobilen Endgerät (Ib), die mit einem Kommunikationsnetz (20) verbunden sind.

9. Speichermittel, das durch ein Informationsverarbeitungsgerät lesbar ist und auf dem ein Computerprogrammprodukt gespeichert ist, umfassend Codeanweisungen für die Ausführung eines Verfahrens nach einem der Ansprüche 1 bis 6 zum Austausch von Multimedianachrichten zwischen einem ersten mobilen Endgerät (Ia) und einem zweiten mobilen Endgerät (Ib), die mit einem Kommunikationsnetz (20) verbunden sind.

## Claims

1. Method for exchanging multimedia messages that comply with the Multimedia Messaging Service (MMS) format between a first mobile terminal (Ia) and a second mobile terminal (Ib) that are connected to a communication network (20), the method comprising the implementation, by a data processing module (11) of the first terminal (Ia), of steps of:
(a) receiving, from the network (20), a first multimedia message transmitted by the second terminal (Ib), the first multimedia message comprising at least one media item;
(b) rendering and modifying said media item in a user interface (I) on the basis of actions by a user, the user interface (I) rendering the first message;
(c) sending a second multimedia message comprising said modified media item to the second terminal (Ib) .

2. Method according to Claim 1, wherein said at least one media item is an image.

3. Method according to Claim 2, wherein said user interface (I) allows the images included in the multimedia messages exchanged between the first and second terminals (Ia, Ib) to be displayed in the form of a conversation thread.

4. Method according to either of Claims 2 and 3, wherein the user interface (I) comprises graphical editing tools for implementing step (b), the image being displayed on the user interface (I) in real time during the modification thereof.

5. Method according to one of the preceding claims, wherein said first terminal (Ia) comprises a touch screen (13) for implementing said user interface (I) of the first terminal (Ia), said actions by the user being touch actions.

6. Method according to one of the preceding claims, wherein the transmission of the multimedia messages in the network (20) is implemented in accordance with the Rich Communication Services (RCS) specifications.

7. Mobile terminal (Ia) connected to a second mobile terminal (Ib) via a communication network (20), the terminal (Ia) comprising a data processing module (11), **characterized in that** the data processing module (11) is configured to:
receive, from the network (20), a first multimedia message that complies with the MMS format and has been transmitted by the second terminal (Ib), the first multimedia message comprising at least one media item;
render and modify said media item in a user interface (I) on the basis of actions by a user, the user interface (I) rendering the first message;
send a second multimedia message that complies with the MMS format and comprises said modified media item to the second terminal (Ib).

8. Computer program product comprising code instructions for the execution of a method according to one of Claims 1 to 6 for exchanging multimedia messages between a first mobile terminal (Ia) and a second mobile terminal (Ib) that are connected to a communication network (20).

9. Storage means that is readable by computer equipment and on which there is stored a computer program product comprising code instructions for the execution of a method according to one of Claims 1 to 6 for exchanging multimedia messages between a first mobile terminal (Ia) and a second mobile terminal (Ib) that are connected to a communication network (20).
